# EUROPÄISCHE PATENTSCHRIFT

(11) **EP 3 300 481 B1**
(45) Veröffentlichungstag und Bekanntmachung des Hinweises auf die Patenterteilung: **22.04.2020**
(21) Anmeldenummer: 16718847.3
(22) Anmeldetag: 04.03.2016
(51) Int. Cl.: A61C 8/00, A61C 13/265

(54) **DENTALES VERANKERUNGSELEMENT**
DENTAL ANCHORING ELEMENT
ÉLÉMENT D'ANCRAGE DENTAIRE

(30) Priorität: 09.03.2015 DE 202015001762 U
(43) Veröffentlichungstag der Anmeldung: 04.04.2018
(73) Patentinhaber: BREDENT GMBH & CO. KG, 89250 Senden (DE)
(72) Erfinder: BÖHM, Wilfried, 89250 Senden (DE)
(74) Vertreter: Dziewior, Joachim
(86) Internationale Anmeldenummer: PCT/DE2016/000096
(87) Internationale Veröffentlichungsnummer: WO 2016/141908

(56) Entgegenhaltungen:
- DE-U1-202012 011 951
- DE-U1-202012 011 951
- US-A- 5 211 561
- US-A1- 2009 263 762

## Beschreibung

Die Erfindung betrifft ein dentales Verankerungselement zur Befestigung eines abnehmbaren Zahnersatzes bzw. einer zahntechnischen Arbeit an einem Zahnimplantat oder einer Zahnwurzel, mit einem fest mit dem Implantat bzw. der zahnwurzel verbindbaren, vorzugsweise in der Art eines Abutments ausgebildeten Anschlussteils, das eine mit einem radial vorstehenden Retentionsvorsprung versehenen Patrizenkörper trägt, ferner mit einem an den Patrizenkörper angepassten Matrizenteil, das mit dem Zahnersatz verbunden ist,
bei welchem das Matrizenteil
weichelastisch ausgebildet ist und den über die Gingiva vorstehenden Teil des Patrizenkörpers zumindest nahezu vollständig formschlüssig umschließt.

Derartige Verankerungselemente sind in unterschiedlicher Weise beschrieben worden und darüber hinaus auch aus der Praxis bekannt. Entscheidend für den Einsatz solcher Verankerungselemente ist es, daas sie im eingesetzten Zustand einen ausreichenden Halt bieten, sich also insbesondere nicht selbsttätig lösen können. Andererseits sollten die Haltekräfte nicht zu groß sein, um dem Träger des Zahnersatzes bzw. dem Zahnarzt die Möglichkeit zu geben, diese ohne zu große Mühen wieder abnehmen zu können.

Aus der DE 20 2012 011 951 ist ein derartiges Verankerungselement bekannt, das sich in der Praxis außerordentlich bewährt hat. Die dort zum Einsatz kommende Kappe führt jedoch zu einer etwas vergrößerten Bauform, wodurch der Einsatz jedenfalls dann erschwert ist, wenn enge räumliche Verhältnisse vorherrschen. Darüber hinaus ist der Anschluss der aus härterem Material bestehenden Kappe an die Gingiva noch nicht optimal, da hierfür weichelastisches Material vorteilhafter ist.

Der Erfindung liegt daher die Aufgabe zugrunde, ein Verankerungselement der eingangs genannten Art dahingehend zu verbessern, dass ein Einsatz eines solchen Verankerungselements auch bei eingeschränkten räumlichen Verhältnissen möglich ist und darüber hinaus eine bessere Anbindung an die Gingiva möglich ist.

Diese Aufgabe wird nach der Erfindung dadurch gelöst, dass das Matrizenteil von einem Klemmring umschlossen ist, der auf das Matrizenteil aufgeschoben und vorzugsweise unterhalb des Retentionsvorsprungs auf der der Gingiva zugewandten Seite des Patrizenkörpers angeordnet ist und mit einem Anpressmittel für das Matrizenteil gegen den Patrizenkörper versehen ist.

Der durch die Erfindung erreichte Vorteil besteht im Wesentlichen darin, dass das Matrizenteil von einem gegenüber einer Kappe deutlich kleineren Klemmring auf dem Patrizenkörper einerseits und im Zahnersatz andererseits gehalten wird, also ein deutlich geringeres Volumen als die im Stand der Technik verwendete Kappe aufweist. Da hierdurch auch der der Gingiva zugewandte Rand des weichelastisch ausgebildeten Matrizenteils freibleibt, kann der Rand des Matrizenteils direkt an die Gingiva anschließen bzw. an diese angeformt werden, so dass in diesem Bereich eine bessere Abdichtung erreicht wird. Im Übrigen wird durch das Anpressmittel zusätzlich eine Abdichtung gegen Keime und Verunreinigungen in der Kavität des Zahnersatz erreicht. Trotz der kleineren Ausgestaltung des Klemmrings gegenüber der bekannten Kappe ist durch das Anpressmittel ein ausreichender Halt des Matrizenteils auf dem Patrizenkörper gewährleistet, wobei außerdem die Möglichkeit besteht, die Matrize bei im Zahnersatz eingesetztem Klemmring auszutauschen.

In bevorzugter Ausführungsform der Erfindung ist vorgesehen, dass der Klemmring an seinem dem Retentionsvorsprung zugewandten Rand mit einem radial einwärts vorstehenden Anlageflansch versehen ist. Dieser Anlageflansch sorgt für eine reproduzierbare Anlage des Klemmrings am Matrizenteil und sorgt auf diese Weise auch bereits für einen zusätzlichen Andruck.

Weiter sieht die Erfindung vor, dass der die eine Stirnseite des Klemmrings bildende Rand des Anlageflansches als verrundete Ringschulter ausgebildet ist.

Um einen optimalen Andruck des Klemmrings am Matrizenteil zu erreichen, ist das Anpressmittel vorzugsweise von einem radial einwärts gerichteten Ringvorsprung gebildet. Hierbei hat es sich weiter als vorteilhaft herausgestellt, wenn der Ringvorsprung zum unteren, zur Gingiva weisenden Rand hin als konische Innenmantelfläche ausgebildet ist, da sich hierdurch der Klemmring ohne weiteres auf das Matrizenteil aufschieben bzw. das Matrizenteil sich in den im Zahnersatz befindlichen Klemmring hineinschieben lässt.

Desweiteren ist der Patrizenkörper bevorzugt kegelstumpfförmig gestaltet und der Retentionsvorsprung am freien oberen Rand des Patrizenkörpers wulstförmig ausgebildet, wobei die Außenkontur des Matrizenteils ebenfalls kegelstumpfförmig gestaltet ist und der Klemmring axial etwa mittig am Matrizenteil angeordnet ist. Durch diese Gestaltung wird einerseits die angestrebte geringe Baugröße gefördert und darüber hinaus der notwendige Halt des Matrizenteils auf dem Patrizenkörper sichergestellt.

In der Praxis hat es sich hierbei als zweckmäßig erwiesen, wenn die axiale Länge des Klemmrings etwa ein Drittel der Länge des Matrizenteils beträgt. Weiter hat sich hierbei ein Kegelwinkel des Patrizenkörpers im Bereich zwischen 9 Grad und 18 Grad als vorteilhaft erwiesen.

Das Matrizenteil ist in an sich schon bekannter Weise zweckmäßig aus Silikonkautschuk gebildet mit einer Shorehärte im Bereich zwischen 30 und 90.

Um einen ausreichenden Halt am Verankerungselement zu erreichen, kann der Klemmring außenseitig mit Verankerungsstrukturen für den Zahnersatz versehen sein.

Schließlich hat es sich als vorteilhaft erwiesen, wenn der Klemmring aus metallischem Werkstoff oder Kunststoff, wie zum Beispiel Peek, besteht.

Im Folgenden wird die Erfindung an einem in der Zeichnung dargestellten Ausführungsbeispiel näher erläutert; es zeigen:

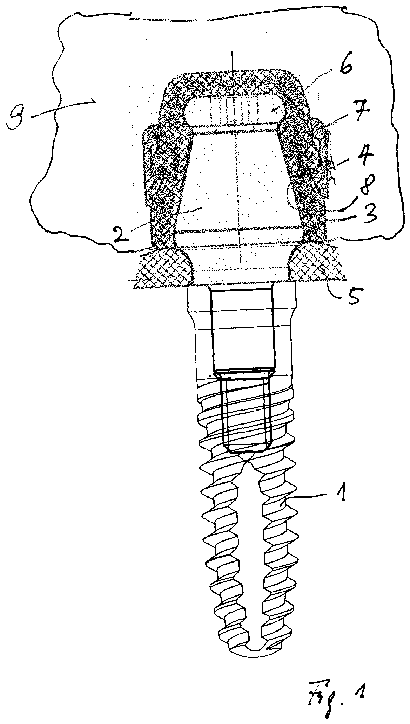

- Fig. 1: ein Verankerungselement zur Versorgung nach der Erfindung im Querschnitt.

Das in der Zeichnung dargestellte dentale Verankerungselement dient der Befestigung von in der Zeichnung nicht näher dargestelltem abnehmbaren Zahnersatz 9, der an vorzugsweise mehreren, in den Kiefer des Patienten eingesetzten Zahnimplantaten 1 oder dort noch vorhandenen Zahnwurzeln befestigt werden kann. Im Einzelnen weist dieses Verankerungselement ein Anschlussteil in der Art eines Abutments auf, das einen Patrizenkörper 2 mit einem radial vorstehenden Retentionsvorsprung 6 trägt. Um nach dem Setzen von Zahnimplantaten bzw. nach Wurzelbehandlungen die vom Zahnersatz 9 auf das Implantat bzw. die Wurzel einwirkenden Kräfte gering zu halten, umfasst das Verankerungselement ein an den Patrizenkörper 2 angepasstes, weich elastisches Matrizenteil 3, das mit dem Zahnersatz 9 verbunden ist. Dabei umschließt das Matrizenteil 3 den über die Gingiva 5 vorstehenden Teil des Patrizenkörpers 2 zumindest nahezu vollständig formschlüssig.

Um den erforderlichen Halt auf den Patrizenkörper 2 zu gewährleisten, ist das Matrizenteil 3 von einem Klemmring 4 umschlossen, der vorzugsweise unterhalb des Retentionsvorsprungs 6 auf der der Gingiva 5 zugewandten Seite des Patrizenkörpers 2 angeordnet ist. Hierzu ist der Klemmring 4 im Übrigen mit einem Anpressmittel für das Matrizenteil 3 gegen den Patrizenkörper 2 versehen.

Desweiteren ist der Klemmring 4 an seinem dem Retentionsvorsprung 6 zugewandten Rand mit einem radial einwärts vorstehenden Anlageflansch 7 versehen, wobei weiter der die eine Stirnseite des Klemmrings 4 bildende Rand des Anlageflansches 7 als verrundete Ringschulter ausgebildet ist.

Das Anpressmittel ist, wie aus der Zeichnung ersichtlich, von einem radial einwärts gerichteten Ringvorsprung 8 gebildet, wobei der Ringvorsprung 8 zum unteren, zur Gingiva 5 weisenden Rand hin als konische Innenmantelfläche ausgebildet ist. Hierdurch lässt sich der Klemmring 4 wegen der Konizität der Innenmantelfläche einfach auf das Matrizenteil 3 aufschieben bzw. das Matrizenteil sich in den im Zahnersatz befindlichen Klemmring hineinschieben lässt.

Wie sich weiter aus der Zeichnung ersehen lässt, ist der Patrizenkörper 2 kegelstumpfförmig gestaltet, wobei der Retentionsvorsprung 6 am freien oberen Rand des Patrizenkörpers 2 wulstförmig ausgebildet ist. Die Außenkontur des Matrizenteils 3 ist ebenfalls kegelstumpfförmig gestaltet, wobei der Klemmring 4 axial etwa mittig am Matrizenteil 3 angeordnet ist.

Üblicherweise wird die axiale Länge des Klemmrings 4 so gewählt sein, dass sie etwa ein Drittel der Länge des Matrizenteils 3 beträgt.

Der Kegelwinkel des Patrizenkörpers 2 liegt bevorzugt im Bereich zwischen 9 Grad und 18 Grad, während das Matrizenteil 3 aus Silikonkautschuk mit einer Shorehärte im Bereich zwischen 30 und 90 gebildet ist.

Schließlich kann der Klemmring 4 außenseitig in in der Zeichnung nicht näher dargestellter Weise mit Verankerungsstrukturen für den Zahnersatz 9 versehen sein, wobei der Klemmring 4 im Übrigen aus jeder Art von geeignetem Werkstoff, bevorzugt aber aus metallischem Werkstoff oder Kunststoff, wie zum Beispiel Peek, besteht.

## Patentansprüche

1. Dentales Verankerungselement zur Befestigung eines abnehmbaren Zahnersatzes (9) bzw. einer zahntechnischen Arbeit an einem Zahnimplantat oder einer Zahnwurzel, mit einem fest mit dem Implantat bzw. der Zahnwurzel verbindbaren, vorzugsweise in der Art eines Abutments ausgebildeten Anschlußteils, das einen mit einem radial vorstehenden Retentionsvorsprung (6) versehenen Patrisenkörper (2) trägt, ferner mit einem an den Patrizenkörper (2) angepassten Matrizenteil (3), das mit dem Zahnersatz (9) verbunden ist,
bei welchem das
Matrizenteil (3) weichelastisch ausgebildet ist und den über die Gingiva (5) vorstehenden Teil des Patrizenkörpers (2) zumindest nahezu vollständig formschlüssig umschließt, **dadurch gekennzeichnet, dass** das Matrizenteil (3) von einem Klemmring (4) umschlossen ist, der auf das Matrizenteil aufgeschoben und vorzugsweise unterhalb des Retentionsvorsprungs (6) auf der der Gingiva (5) zugewandten Seite des Patrizenkörpers angeordnet ist und mit einem Anpressmittel für das Matrizenteil gegen den Patrizenkörper versehen ist.

2. Verankerungselement nach Anspruch 1, **dadurch gekennzeichnet, daß** der Klemmring (4) an seinem dem Retensionsvorsprung (6) zugewandten Rand mit einem radial einwärts vorstehenden Anlageflansch (7) versehen ist.

3. Verankerungselement nach Anspruch 2, **dadurch gekennzeichnet, daß** der die eine Stirnseite des Klemmrings (4) bildende Rand des Anlageflansches (7) als verrundete Ringschulter ausgebildet ist.

4. Verankerungselement nach einem der Ansprüche 1 bis 3, **dadurch gekennzeichnet, daß** das Anpressmittel von einem radial einwärts gerichteten Ringvorsprung (8) gebildet ist.

5. Verankerungselement nach Anspruch 4, **dadurch gekennzeichnet, daß** der Ringvorsprung (8) zum unteren, zur Gingiva (5) weisenden Rand hin als konische Innenmantelfläche ausgebildet ist.

6. Verankerungselement nach einem der Ansprüche 1 bis 5, **dadurch gekennzeichnet, daß** der Patrizenkörper (2) kegelstumpfförmig gestaltet und der Retentionsvorsprung (6) am freien oberen Rand des Patrizenkörpers (2) wulstförmig ausgebildet ist, wobei die Außenkontur des Matrizenteils (3) ebenfalls kegelstumpfförmig gestaltet ist und der Klemmring (4) axial etwa mittig am Matrizenteil (3) angeordnet ist.

7. Verankerungselement nach einem der Ansprüche 1 bis 6, **dadurch gekennzeichnet, daß** die axiale Länge des Klemmrings (4) etwa ein Drittel der Länge des Matrizenteils (3) beträgt.

8. Verankerungselement nach Anspruch 6 oder 7, **dadurch gekennzeichnet, daß** der Kegelwinkel des Patrizenkörpers (2) im Bereich zwischen 9° und 18° liegt.

9. Verankerungselement nach einem der Ansprüche 1 bis 8, **dadurch gekennzeichnet, daß** das Matrizenteil (3) aus Silikonkautschuk mit einer Shorehärte im Bereich zwischen 30 und 90 gebildet ist.

10. Verankerungselement nach einem der Ansprüche 1 bis 9, **dadurch gekennzeichnet, daß** der Klemmring (4) außenseitig mit Verankerungsstrukturen für den Zahnersatz (9) versehen ist.

11. Verankerungselement nach einem der Ansprüche 1 bis 10, **dadurch gekennzeichnet, daß** der Klemmring (4) aus metallischem Werkstoff oder Kunststoff, wie zum Beispiel Peek, besteht.

## Claims

1. A dental anchoring element for fixing a removable dental prosthesis (9) or a dental work on a dental implant or a tooth root, comprising a connecting portion which can be fixedly connected to the implant or the tooth root and which is preferably in the form of an abutment and which carries a male body (2) provided with a radially projecting retention projection (6), and further comprising a female part (3) adapted to the male body (2) and connected to the dental prosthesis (9), in which the female part (3) is soft-elastic and at least almost completely surrounds in positively locking relationship the part of the male body (2) projecting above the gingiva (5), **characterised in that** the female part (3) is enclosed by a clamping ring (4) which is pushed on to the female part and is preferably arranged below the retention projection (6) on the side of the male body facing towards the gingiva (5) and is provided with a pressing means for pressing the female part against the male body.

2. An anchoring element according to claim 1 **characterised in that** the clamping ring (4) is provided at its edge facing towards the retention projection (6) with a radially inwardly projecting contact flange (7).

3. An anchoring element according to claim 2 **characterised in that** the edge of the contact flange (7) that forms the end of the clamping ring (4) is in the form of a rounded annular shoulder.

4. An anchoring element according to one of claims 1 to 3 **characterised in that** the pressing means is formed by a radially inwardly directed annular projection (8).

5. An anchoring element according to claim 4 **characterised in that** the annular projection (8) towards the lower edge facing the gingiva (5) is in the from of a conical inner peripheral surface.

6. An anchoring element according to one of claims 1 to 5 **characterised in that** the male body (2) is of a frustoconical configuration and the retention projection (6) is of a bead-shaped configuration at the free upper edge of the male body (2), wherein the outer contour of the female part (3) is also of a frustoconical configuration and the clamping ring (4) is arranged axially approximately centrally on the female part (3).

7. An anchoring element according to one of claims 1 to 6 **characterised in that** the axial length of the clamping ring (4) is approximately one third of the length of the female part (3).

8. An anchoring element according to claim 6 or 7 **characterised in that** the cone angle of the male body (2) is in the range between 9° and 18°.

9. An anchoring element according to one of claims 1 to 8 **characterised in that** the female part (3) is formed from silicone rubber with a Shore hardness in the range between 30 and 90.

10. An anchoring element according to one of claims 1 to 9 **characterised in that** the clamping ring (4) is provided on the outside with anchoring structures for the dental prosthesis (9).

11. An anchoring element according to one of claims 1 to 10 **characterised in that** the clamping ring (4) comprises metallic material or plastic like for example Peek.

## Revendications

1. Élément d'ancrage dentaire destiné à fixer une prothèse dentaire amovible (9) respectivement un ouvrage prothétique dentaire sur un implant dentaire ou une racine dentaire, comprenant une partie de raccord qui peut être reliée de manière solidaire à l'implant, respectivement à la racine dentaire, de préférence réalisée sous la forme d'un pilier et qui porte un corps d'élément mâle (2) muni d'une saillie de retenue (6) qui fait saillie radialement, comprenant en outre une partie d'élément femelle (3) adaptée au corps d'élément mâle (2) et reliée à la prothèse dentaire (9), dans lequel la partie d'élément femelle (3) est réalisée souple et élastique et entoure au moins presque entièrement par complémentarité de forme la partie du corps d'élément mâle (2) qui fait saillie au-dessus de la gencive (5), **caractérisé en ce que** la partie d'élément femelle (3) est entourée par une bague de serrage (4) qui est insérée sur la partie d'élément femelle et est disposée de préférence en-dessous de la saillie de retenue (6) sur la face du corps d'élément mâle située en regard de la gencive (5) et est munie d'un moyen de pression pour la partie d'élément femelle contre le corps d'élément mâle.

2. Élément d'ancrage selon la revendication 1, **caractérisé en ce que** la bague de serrage (4) est munie, sur son bord en regard de la saillie de retenue (6), d'une bride d'appui (7) qui fait saillie radialement vers l'intérieur.

3. Élément d'ancrage selon la revendication 2, **caractérisé en ce que** le bord de la bride d'appui (7) qui forme une face frontale de la bague de serrage (4) est réalisé sous la forme d'un épaulement arrondi de la bague.

4. Élément d'ancrage selon une des revendications 1 à 3, **caractérisé en ce que** le moyen de pression est formé par une saillie de bague (8) dirigée radialement vers l'intérieur.

5. Élément d'ancrage selon la revendication 4, **caractérisé en ce que** la saillie de bague (8) est réalisée sous la forme d'une surface de revêtement intérieur conique par rapport au bord inférieur tourné vers la gencive (5).

6. Élément d'ancrage selon une des revendications 1 à 5, **caractérisé en ce que** le corps d'élément mâle (2) est configuré tronconique et la saillie de retenue (6) est réalisée en forme de boudin sur le bord supérieur libre du corps d'élément mâle (2), dans lequel le contour extérieur de la partie d'élément femelle (3) est également configuré tronconique et la bague de serrage (4) est disposée axialement à peu près au centre de la partie d'élément femelle (3).

7. Élément d'ancrage selon une des revendications 1 à 6, **caractérisé en ce que** la longueur axiale de la bague de serrage (4) représente à peu près un tiers de la longueur de la partie d'élément femelle (3).

8. Élément d'ancrage selon la revendication 6 ou 7, **caractérisé en ce que** l'angle de cône du corps d'élément mâle (2) se trouve dans la plage comprise entre 9° et 18°.

9. Élément d'ancrage selon une des revendications 1 à 8, **caractérisé en ce que** la partie d'élément femelle (3) est formée en caoutchouc de silicone présentant une dureté Shore dans la plage comprise entre 30 et 90.

10. Élément d'ancrage selon une des revendications 1 à 9, **caractérisé en ce que** la bague de serrage (4) est munie sur sa face extérieure de structures d'ancrage pour la prothèse dentaire (9).

11. Élément d'ancrage selon une des revendications 1 à 10, **caractérisé en ce que** la bague de serrage (4) est composée d'un matériau métallique ou d'une matière plastique, tel que le Peek par 35exemple.
